Europäisches Patentamt

European Patent Office

Office européen des brevets

(19)

(11) Veröffentlichungsnummer : **0 167 712**
**B1**

(12) ## EUROPÄISCHE PATENTSCHRIFT

(45) Veröffentlichungstag der Patentschrift :
21.12.88

(21) Anmeldenummer : 85103625.1

(22) Anmeldetag : 27.03.85

(51) Int. Cl.⁴ : **B 60 G 21/04**

(54) **Stabilisator für Fahrzeuge.**

(30) Priorität : **19.04.84 CH 1973/84**

(43) Veröffentlichungstag der Anmeldung :
**15.01.86 Patentblatt 86/03**

(45) Bekanntmachung des Hinweises auf die Patenterteilung : **21.12.88 Patentblatt 88/51**

(84) Benannte Vertragsstaaten :
**AT DE FR GB IT SE**

(56) Entgegenhaltungen :
**DE—A— 2 252 017**

(73) Patentinhaber : **BUCHER-GUYER AG Maschinenfabrik
CH-8166 Niederweningen/Zürich (CH)**

(72) Erfinder : **Wymann, Markus
Binzackerweg 14
CH-8166 Niederweningen (CH)**

**Beschreibung**

Die Erfindung betrifft einen Stabilisator zur Minderung der Wankbewegungen an einem Fahrzeug mit starr ausgebildeten Achsen, die mit jeweils einer Deichselvorrichtung versehen sind.

Beim Befahren von Kurven auf Strassen und Wegen oder in unebenem Gelände oder in Hanglagen neigt sich der Fahrzeugaufbau zur Seite. Diese Eigenschaft wirkt sich negativ auf die Fahrsicherheit und den Fahrkomfort des Fahrzeuges aus.

Bei Fahrzeugen mit weich abgestimmter tragender Federung werden sogenannte Stabilisatoren zur Reduzierung der Seitenneigung eingesetzt.

Andere bekannte Stabilisatoren reagieren auf unebener Fahrbahn auch dann, wenn z. B. die diagonalgegenüberliegenden Räder ein- oder ausfedern, obschon dadurch keine Seitenneigung vorliegt. Es ergeben sich dadurch Radlastschwankungen, Torsionsbelastungen am Fahrzeugrahmen und eine verminderte Geländegängigkeit.

Gegen diese Wankbewegungen ist beispielsweise gemäss der Offenlegungsschrift DE-A 22'52'017 ein Stabilisator entwickelt worden, bei dem jeweils zwei diagonal gegenüberliegende Räder eines Fahrzeuges mit einer Torsionsstab-Anordnung verbunden sind, wobei nach den Ausführungen mit der starren Fahrachse zweiteilige, durch Hebel verbundene Torsionsstäbe, an der Fahrgestell-Unterseite gelagert sind. Eine solche Anordnung erweist sich bei einem Fahrzeug der eingangs beschriebenen Art als aufwendig in der Herstellung und bei der Montage.

Es stellt sich somit die Aufgabe an die Erfindung, einen Stabilisator zu schaffen, mit dem diese Nachteile behoben werden können, ohne dass dadurch die Schränkfähigkeit der Achsen beeinträchtigt wird.

Erfindungsgemäss wird diese Aufgabe dadurch gelöst, dass die einander entgegengerichteten vorderen Deichselenden der in der Längsachse des Fahrzeuges angeordneten Deichselvorrichtungen am Fahrzeugrahmen angelenkt und an dessen einander gegenüberliegenden Längsseiten nachgiebig abgestützt sind.

Diese Ausbildung der Deichseln vereinfacht die Bauweise eines Stabilisators für ein Fahrzeug in erheblichem Masse und ermöglicht eine Verbesserung der Festigkeitseigenschaften der beanspruchten Teile.

Vorteilhafterweise sind die einander entgegengerichteten vorderen Deichselenden jeweils mit einem sich quer zur Fortbewegungsrichtung des Fahrzeuges und annähernd parallel zum Fahrzeugrahmen erstreckenden, an den freien Enden abstützbaren Träger ausgebildet, wodurch eine höhere Elastizität entsteht.

Vorzugsweise ist zwischen den Trägern der Deichselvorrichtungen und annähernd parallel zu diesen, eine am Fahrzeugrahmen an hebelartig abgekröpften Enden schwenkbar abgestützte Torsionswelle angeordnet, die durch jeweils einen seitlich versetzten Lenker mit jeder Deichselvorrichtung schwenkbar verbunden ist. Durch diese besondere Ausgestaltung entsteht eine höhere Elastizität für den Stabilisator.

Es erweist sich als vorteilhaft, wenn die abgekröpften Enden der Torsionswelle in Schwenklagern achsialverschiebbar geführt sind. Diese Ausbildung zeigt sich als konstruktiv einfach und wartungsfreundlich.

Die die Deichselvorrichtung und die Torsionswelle verbindenden Lenker können mit einer achsialverschieb- und schwenkbar an der Torsionswelle gelagerten Buchse und mit einem von letzterer senkrecht abstehenden, im Träger der Deichselvorrichtung drehbar lagernden Drehzapfen ausgebildet sein.

Als alternative Abstützmöglichkeit können die abgekröpften Enden der Torsionswelle durch Stützlenker mit am Fahrzeugrahmen befestigten Schwenklagern verbunden sein. Diese Bauart ermöglicht die Verwendung vorhandener Teile aus Serienfertigungen und erweist sich als wartungsfreundlich.

Als vorzüglich erweist sich, wenn die Deichselvorrichtungen mit den ihnen zugeordneten Achsen einen sich zum vorderen Deichselende hin verjüngenden trapezförmigen Schubrahmen bilden. Diese Form gestattet eine hohe Stabilität.

Alternativ können die Deichselvorrichtungen als in der Längsmittelachse des Fahrzeuges angeordnete Schubrohre ausgebildet sein, an deren vorderem Ende ein rechtwinklig zur Seite gerichteter, mit der Torsionswelle schwenk- und achsialverschiebbar verbundener Träger vorgesehen ist.

Diese Ausgestaltung erweist sich als leichtere Bauweise.

Bei einer anderen Ausführungsform sind die Träger der Deichselvorrichtung beidseits durch Ausleger verlängert, welche Ausleger an jeweils einem Hebel eines seitlich am Fahrzeugrahmen um eine horizontale Querachse lagernden Waagbalkens angreifen.

Vorteilhaft sind die Träger der Deichselvorrichtungen mittels Federn oder dgl. elastisch an den Hebeln des Waagbalkens abgestützt. Diese Massnahme bietet Schutz vor schlagartigen Belastungen.

Zweckmässige Weiterbildungen der Erfindung ergeben sich aus den abhängigen Ansprüchen.

Weitere Einzelheiten der Erfindung ergeben sich aus der anschliessenden Beschreibung sowie der Zeichnung, auf die bezüglich aller nicht im Text beschriebenen Einzelheiten verwiesen wird. Es zeigen in beispielhafter Ausführung :

Fig. 1 eine Draufsicht auf den erfindungsgemässen Stabilisator eines Fahrzeuges,

Fig. 2 eine vergrösserte Darstellung der Seitenansicht gemäss Pfeil A in Fig. 1,

Fig. 3 eine alternative Ausführungsform zu Fig. 2,

Fig. 4 eine Draufsicht auf den Stabilisator in alternativer Ausführungsform,

Fig. 5 eine alternative Ausführungsform der seitlichen Deichselabstützung,

Fig. 6 eine Draufsicht auf die Vorrichtung in Fig. 5 und

Fig. 7 einen Querschnitt durch die Vorrichtung nach der Linie VII-VII in Fig. 6.

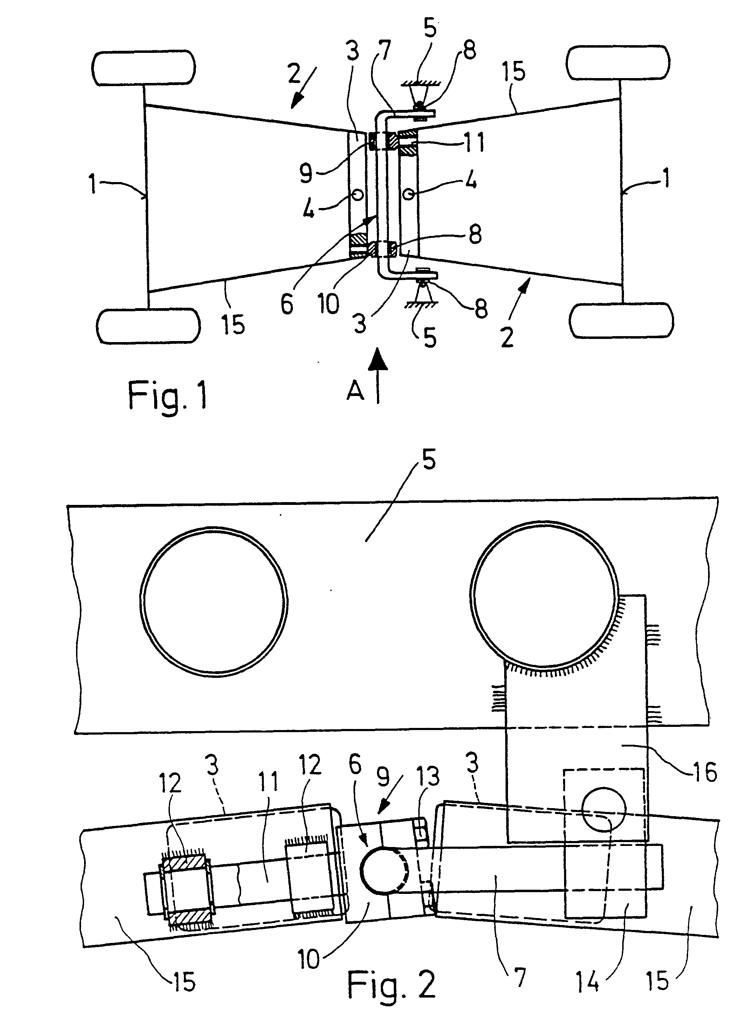

In Fig. 1 ist ein Stabilisator an einem Fahrzeug mit zwei starren Achsen 1 dargestellt. Mit letzteren ist jeweils eine Deichselvorrichtung 2 verbunden, welche an den vorderen Enden mit einem quer zur Fahrzeuglängsachse und annähernd parallel zum Fahrzeugchassis sich erstreckenden Träger 3 versehen sind. Diese Träger 3 sind an der Fahrzeugunterseite angelenkt und an den gegenüberliegenden Längsseiten des Fahrgestells nachgiebig abgestützt. Der Anlenkpunkt 4 des vorderen Deichselendes weist die Eigenschaften eines Gelenkes auf, sodass die Deichselvorrichtungen 2 um den Anlenkpunkt gelenkähnlich beweglich sind. Die Bewegungsfreiheit der Deichselvorrichtungen 2 wird durch die Befestigungsanordnung am Fahrzeugchassis bestimmt. Gemäss Fig. 1 ist zwischen den Trägern 3 und zumindest annähernd parallel zu diesen eine Torsionswelle 6 vorgesehen, die mit ihren hebelartig abgekröpften Enden 7 an den gegenüberliegenden Längsseiten des Fahrgestells, hier Fahrzeugchassis 5, abgestützt ist. Zu diesem Zweck sind Schwenklager 8 angeordnet, in welchen die abgekröpften Enden 6 geführt sind. Gegenüber den Anlenkpunkten 4 der Deichselvorrichtungen 2 seitlich versetzt, verbindet jeweils ein Lenker 9 die Torsionswelle 6 mit dem Träger 3 der Deichselvorrichtung 2. Der Lenker 9 weist eine auf der Torsionswelle 6 verschiebbar lagernde Buchse 10 auf, an der ein rechtwinklig zur Drehachse ausgerichteter Drehzapfen 11 vorgesehen ist, welcher im Träger 3 der Deichselvorrichtung 2 drehbar lagert.

Die Deichselvorrichtungen 2 sind als trapezförmig sich zum Anlenkpunkt 4 hin verjüngende Schubrahmen ausgebildet und weisen dadurch vorteilhafte Festigkeitseigenschaften auf.

Selbstverständlich wäre es möglich, wenn auch in verschlechterter Ausführungsform, die Träger 3 und die Torsionswelle 6 in eine schräg verlaufende Parallellage zu versetzen, sodass die seitlichen Abstützpunkte am Fahrzeugrahmen in Längsrichtung betrachtet entfernt voneinander liegen.

Die Abstützung an sich stellt an den Fachmann keine besonderen Anforderungen, wenn der prinzipielle Aufbau wie in Fig. 1 aufgezeigt ist. So ist beispielsweise in Fig. 2 eine alternative Ausführungsform veranschaulicht, gemäss welcher die Lenker 9 einandergegenüberliegend an einer Seitenstrebe 15 der Deichselvorrichtung 2 gelagert sind. Es sind dafür zwei Lager 12 angebracht, von denen jeweils das eine u. a. auch der axialen Sicherung des Drehzapfens 11 dient. Die Buchse 10 ist in ihrer Drehachse zweigeteilt und mittels Schrauben 13 zu einem Teil vereinigt.

Die abgekröpften Enden 7 der Torsionswelle 6 sind in einem als Schwenklager ausgebildeten Stützlenker 14 axial geführt, der seinerseits in einem am Fahrzeugchassis 5 befestigten Support 16 lagert.

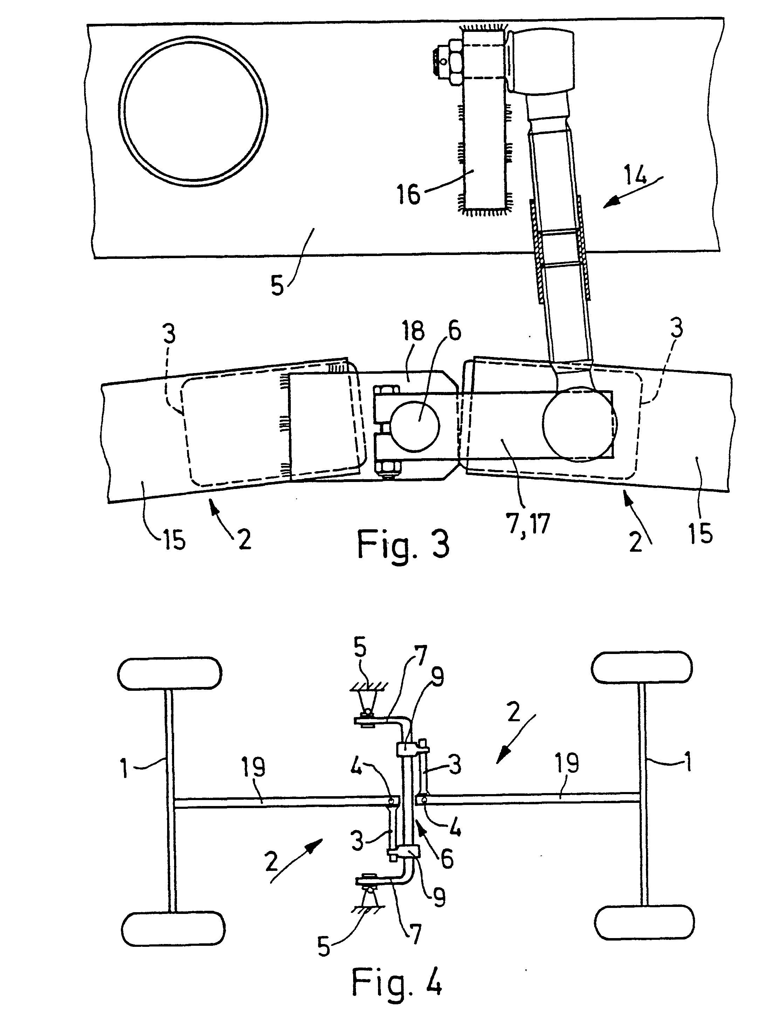

Die Fig. 3 zeigt eine weitere Ausführungsform zur Abstützung der Deichselvorrichtungen 2 mit ihren vorderen Enden am Fahrzeugchassis. Die abgekröpften Enden 7 der Torsionswelle 6 werden durch Verbindungselemente 17 gebildet, die an der durchgehenden Welle festgeklemmt sind und an denen am anderen Ende ein in einem Support 16 des Fahrzeugchassis' lagernder Stützlenker 14 angreift. Die Aufnahme der Torsionswelle 6 an den Deichselvorrichtungen 2 ist in Lagern 18 vorgesehen, von denen jeweils eines an den gegenüberliegenden Seitenstreben 15 befestigt ist.

Fig. 4 zeigt eine alternative Ausführungsform der Deichselvorrichtungen 2, die jeweils ein in der Längsmittelachse des Fahrzeuges angeordnetes Schubrohr 19 aufweisen, welche einerseits mit den Achsen starr verbunden und gegen die Fahrgestellmitte hin an den Anlenkpunkten 4 gelagert sind. Im Bereich ihrer Anlenkpunkte 4 sind die Schubrohre 19 mit einem rechtwinklig zur Seite ragenden Träger 3 versehen, welche Träger 3 mittels Lenker 9 die zwischen den Anlenkpunkten 4 liegende Torsionswelle 6 schwenk- und axialverschiebbar verbinden. Die abgekröpften Enden 7 der Torsionswelle 6 sind gegenüber der Fig. 1 in entgegengesetzter Richtung angeordnet und es würde auch die Ausführungsform der Abstützung gemäss Fig. 2 ihren Zweck vollumfänglich erfüllen.

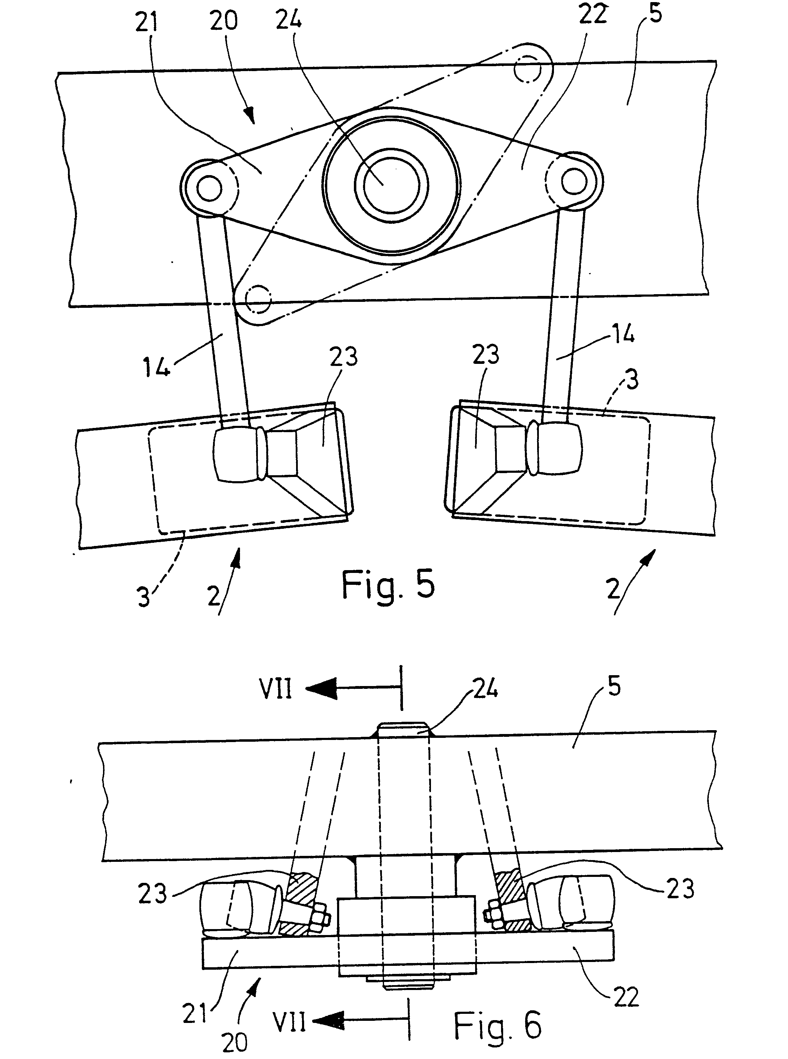

In den Fig. 5 und 6 ist eine weitere Lösungsform veranschaulicht. Am Fahrzeugchassis 5 ist an den Längsseiten des Fahrgestells ein um eine horizontale Querachse 24 gelagerter Waagbalken 20 vorgesehen, an dessen Hebeln 21, 22 jeweils paarweise die Stützlenker 14 mit den durch Ausleger 23 verlängerten Träger 3 an den vorderen Enden der Deichselvorrichtungen 2 angelenkt sind. Fig. 6 verdeutlicht die Lagerung des Waagbalkens 21 an der Querachse 24 im Fahrzeugchassis 5.

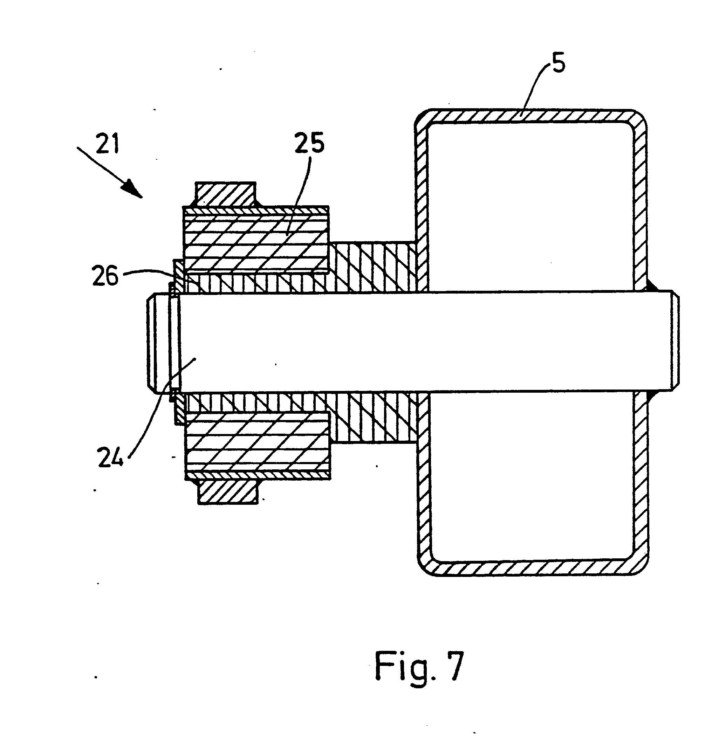

Die besondere Ausgestaltung der Waagbalkenanordnung ist in Fig. 7 gezeigt. Der Waagbalken ist mit einer Nabe 25 versehen, die auf einer auf die Querachse 24 gepressten Buchse 26 lagert.

Bezugszeichenliste

1 Achse
2 Deichselvorrichtung
3 Träger
4 Anlenkpunkt
5 Fahrzeugrahmen
6 Torsionswelle
7 Ende
8 Schwenklager
9 Lenker
10 Buchse
11 Drehzapfen
12 Lager
13 Schraube
14 Stützlenker
15 Seitenstrebe
16 Support

17 Verbindungselemente
18 Lager
19 Schubrohr
20 Waagbalken
21 Hebel
22 Hebel
23 Ausleger
24 Querachse
25 Nabe
26 Büchse

**Patentansprüche**

1. Stabilisator zur Minderung der Wankbewegungen an einem Fahrzeug mit starr ausgebildeten Achsen (1), die mit jeweils einer Deichselvorrichtung (2) versehen sind, dadurch gekennzeichnet, dass die einander entgegengerichteten vorderen Deichselenden (3) der in der Längsachse des Fahrzeuges angeordneten Deichselvorrichtungen am Fahrzeugrahmen (5) angelenkt (4) und an dessen einander gegenüberliegenden Längsseiten nachgiebig abgestützt sind.

2. Stabilisator nach Anspruch 1, dadurch gekennzeichnet, dass die einander entgegengerichteten vorderen Deichselenden jeweils mit einem sich quer zur Fortbewegungsrichtung des Fahrzeuges und annähernd parallel zum Fahrzeugrahmen (5) erstreckenden, an den freien Enden abstützbaren Träger (3) ausgebildet sind.

3. Stabilisator nach den Ansprüchen 1 und 2, dadurch gekennzeichnet, dass zwischen den Trägern (3) der Deichselvorrichtungen (2) und zumindest annähernd parallel zu diesen, eine am Fahrzeugrahmen (5) an hebelartig abgekröpften Enden (7) schwenkbar abgestützte Torsionswelle (6) angeordnet ist, die durch jeweils einen seitlich versetzten Lenker (9) mit jeder Deichselvorrichtung (2) schwenkbar verbunden ist.

4. Stabilisator nach den Ansprüchen 1 bis 3, dadurch gekennzeichnet, dass die abgekröpften Enden (7) der Torsionswelle (6) in Schwenklagern (8) achsialverschiebbar geführt sind.

5. Stabilisator nach den Ansprüchen 1 bis 4, dadurch gekennzeichnet, dass die aus einer Buchse (10) und einem von der Drehachse letzterer senkrecht abstehenden, im Träger (3) der Deichselvorrichtung (2) drehbar lagernden Drehzapfen (11) gebildeten Lenker (9) achsialverschieb- und schwenkbar an der Torsionswelle (6) gelagert sind.

6. Stabilisator nach den Ansprüchen 1 bis 3, dadurch gekennzeichnet, dass die abgekröpften Enden (7) der Torsionswelle (6) und das Schwenklager (8) am Fahrzeugrahmen durch einen Stützlenker (14) verbunden sind.

7. Stabilisator nach den Ansprüchen 1 und 2, dadurch gekennzeichnet, dass die Deichselvorrichtungen (2) mit den ihnen zugeordneten Achsen (1) des Fahrzeuges einen sich zum vorderen Deichselende hin verjüngenden trapezförmigen Schubrahmen bilden.

8. Stabilisator nach einem der Ansprüche 1 bis 5, dadurch gekennzeichnet, dass die Deichselvorrichtungen (2) als in der Längsmittelachse des Fahrzeuges angeordnete Schubrohre (19) ausgebildet sind, an deren vorderem Ende ein rechtwinklig zur Seite gerichteter, mit der Torsionswelle (6) schwenk- und achsialverschiebbar verbundener Träger (3) vorgesehen ist.

9. Stabilisator nach den Ansprüchen 1, 2 und 6, dadurch gekennzeichnet, dass die durch Ausleger (23) beidseits ihrer Quererstreckung verlängerten Träger (3) der Deichselvorrichtungen (2) an jeweils einem Hebel (21, 22) eines jeweils seitlich am Fahrzeugrahmen um eine horizontale Querachse (24) lagernden Waagbalkens (20) angreifen.

10. Stabilisator nach Anspruch 1, 6 und 8, dadurch gekennzeichnet, dass die Träger (6) der Deichselvorrichtungen (2) elastisch an den Hebeln (21, 22) des Waagbalkens (20) abgestützt sind.

**Claims**

1. Stabiliser for diminishing rolling motion in a vehicle with axles (1) developed as rigid, each of which is provided with a drawbar device (2), characterised in that the front ends of the drawbar (3), pointing towards each other, of the drawbar devices arranged along the longitudinal axis of the vehicle are linked (4) to the frame (5) of the vehicle, and are non-rigidly supported at the longitudinal sides of the vehicle frame.

2. Stabiliser according to claim 1, characterised in that the front ends of the drawbar that face each other are each developed with a strut (3) that may be suppported at its free ends, extending across the direction of motion of the vehicle and approximately parallel to the frame (5) of the vehicle.

3. Stabiliser according to claims 1 and 2, characterised in that a torsion shaft (6), supported at the vehicle frame (5) to swivel about ends (7) bent like a handle, which has a swivel-connection with each drawbar device (2), in each case via one laterally displaced connecting rod (9), is preferably arranged between the struts (3) of the drawbar devices (2) and at least approximately parallel to the latter.

4. Stabiliser according to claims 1 to 3, characterised in that the bent-away ends (7) of the torsion shaft (6) are guided, with the possibility of axial displacement, in swivel bearings (8).

5. Stabiliser according to claim 1 to 4, characterised in that the steering elements (9) formed from a box (10) and a pivot pin (11) projecting perpendicularly from the latter and rotatably mounted in the strut (3) of the drawbar device (2) are mounted on the torsion shaft (6) with axial and swivelling mobility.

6. Stabiliser according to claims 1 to 3, characterised in that the bent-away ends (7) of the torsion shaft (6) and the swivel bearing (8) are joined at the vehicle frame (5) by a support connecting rod (14).

7. Stabiliser according to claims 1 and 2, characterised in that the drawbar devices (2) form, with the axles (1) of the vehicle assigned to them, a trapezoidal thrust frame tapering in the direction of the front end of the drawbar.

8. Stabiliser according to one of claims 1 to 5, characterised in that the drawbar devices (2) are designed as thrust tubes in the central longitudinal axis of the vehicle, to whose front end a strut pointing to laterally at right angles, and joined to the torsion shaft (6) with swivelling and axial mobility, is provided.

9. Stabiliser according to claims 1, 2 and 6, characterised in that the struts (3) of the drawbar devices (2), extended on both sides of their lateral extension by extension arms (23), each grip a lever (21, 22) respectively, of a balance beam (20) mounted laterally on the vehicle frame about a horizontal cross-axle (24).

10. Stabiliser according to claim 1, 6 and 8, characterised in that the struts (3) of the drawbar devices (2) are elastically supported at the levers (21, 22) of the balance beam (20).

## Revendications

1. Stabilisateur pour atténuer les mouvements de roulis sur un véhicule muni d'essieux (1) de réalisation rigide et qui sont équipés chacun d'une timonerie (2), caractérisé par le fait que les extrémités antérieures (3) des timons, dirigées l'une contre l'autre, des timoneries disposées selon l'axe longitudinal du véhicule, sont articulées (4) sur le châssis (5) de ce véhicule, et sont soutenues élastiquement sur les côtés longitudinaux mutuellement opposés de ce châssis.

2. Stabilisateur selon la revendication 1, caractérisé par le fait que les extrémités antérieures des timons, dirigées l'une contre l'autre, sont munies chacune d'un support (3) qui s'étend transversalement à la direction d'avance du véhicule, et à peu près parallèlement au châssis (5) de ce véhicule, et pouvant être soutenu aux extrémités libres.

3. Stabilisateur selon les revendications 1 et 2, caractérisé par le fait qu'un arbre de torsion (6), interposé entre les supports (3) des timoneries (2), au moins approximativement parallèlement à ceux-ci, est en appui avec faculté de pivotement sur le châssis (5) du véhicule, par des extrémités coudées (7) du type levier, et est relié à chaque timonerie (2) avec faculté de pivotement, par l'intermédiaire d'une biellette respective (9) décalée latéralement.

4. Stabilisateur selon les revendications 1 à 3, caractérisé par le fait que les extrémités coudées (7) de l'arbre de torsion (6) sont guidées, dans des paliers de pivotement (8), avec faculté de coulissement axial.

5. Stabilisateur selon les revendications 1 à 4, caractérisé par le fait que les biellettes (9), formées d'un coussinet (10) et d'un tourillon (11) qui fait saillie verticalement au-delà de l'axe de rotation de ce dernier, et est monté rotatif dans le support (3) de la timonerie (2), sont montées sur l'arbre de torsion (6) avec faculté de coulissement axial et de pivotement.

6. Stabilisateur selon les revendications 1 à 3, caractérisé par le fait que les extrémités coudées (7) de l'arbre de torsion (6) et le palier de pivotement (8) sont reliés au châssis (5) du véhicule par l'entremise d'une biellette de soutien (14).

7. Stabilisateur selon les revendications 1 et 2, caractérisé par le fait que les timoneries (2) forment, avec les essieux (1) du véhicule qui leur sont associés, un cadre trapézoïdal de poussée se rétrécissant vers l'extrémité antérieure des timons.

8. Stabilisateur selon l'une des revendications 1 à 5, caractérisé par le fait que les timoneries (2) sont réalisées sous la forme de tubes de poussée (19) disposés selon l'axe médian longitudinal du véhicule, à l'extrémité antérieure desquels est prévu un support (3) qui est orienté à angle droit vers le côté, et est relié à l'arbre de torsion (6) avec faculté de pivotement et de coulissement axial.

9. Stabilisateur selon les revendications 1, 2 et 6, caractérisé par le fait que les supports (3) des timoneries (2), prolongés de part et d'autre de leur étendue transversale par des consoles (23) en porte-à-faux, sont respectivement en prise avec un levier (21, 22) d'un fléau (20) monté de chaque côté, autour d'un axe transversal horizontal (24), sur le châssis du véhicule.

10. Stabilisateur selon les revendications 1, 6 et 8, caractérisé par le fait que les supports (3) des timoneries (2) sont en appui élastique sur les leviers (21, 22) du fléau (20).

Fig. 1

Fig. 2

Fig. 3

Fig. 4

2

Fig. 5

Fig. 6

Fig. 7